# EUROPÄISCHE PATENTSCHRIFT

(11) **EP 4 673 665 B1**
(45) Veröffentlichungstag und Bekanntmachung des Hinweises auf die Patenterteilung: **15.07.2026**
(21) Anmeldenummer: 24706155.9
(22) Anmeldetag: 23.02.2024
(51) Int. Cl.: F16H 55/08, F03D 15/00, F16H 55/17, F16H 55/26

(54) **ZAHN FÜR EINE VERZAHNTE DREHMOMENTÜBERTRAGUNGSANORDNUNG UND VERFAHREN ZUR HERSTELLUNG EINES DERARTIGEN ZAHNS**
TOOTH FOR A TOOTHED TORQUE TRANSMISSION ASSEMBLY AND METHOD FOR PRODUCING SUCH A TOOTH
DENT POUR ENSEMBLE DE TRANSMISSION DE COUPLE À ENGRENAGE ET PROCÉDÉ DE FABRICATION D'UNE TELLE DENT

(30) Priorität: 28.02.2023 EP 23159105
(43) Veröffentlichungstag der Anmeldung: 07.01.2026
(73) Patentinhaber: Flender GmbH, 46395 Bocholt (DE)
(72) Erfinder: DÜNCK-KERST, Klaus, 46395 Bocholt (DE); VRIESEN, Johannes, 46395 Bocholt (DE); JACOB, Thomas, 46395 Bocholt (DE)
(74) Vertreter: Michalski Hüttermann & Partner mbB
(86) Internationale Anmeldenummer: PCT/EP2024/054665
(87) Internationale Veröffentlichungsnummer: WO 2024/179937

(56) Entgegenhaltungen:
- EP-A2- 2 774 709
- DE-A1- 2 848 206
- US-A1- 2010 071 495

## Beschreibung

Die Erfindung betrifft einen Zahn für eine verzahnte Drehmomentübertragungsanordnung sowie ein Verfahren zur Herstellung eines derartigen Zahns, mit dessen Hilfe ein Verzahnungseingriff in der Drehmomentübertragungsanordnung, insbesondere ein Windkraftgetriebe, geräuschverbessert erfolgen kann. Die Erfindung betrifft ferner ein Verzahnungselement mit einem derartigen Zahn, ein Windkraftgetriebe mit einem derartigen Zahn oder einem derartigen Verzahnungselement, ein Computerprogrammprodukt zur Durchführung des Verfahrens sowie ein Datenagglomerat zur additiven Fertigung und/oder Simulation des Zahns oder des Verzahnungselements.

Aus EP 2 774 709 A2 ist es bekannt einen genormten Zahn einer Zahnradpaarung an dessen Zahnflanke mit einer periodischen Welligkeit zu versehen, um einen durch Unregelmäßigkeiten im Zahneingriff der Zahnradpaarung unter Last entstehende Schwingungen zu reduzieren, wodurch eine Gleichförmigkeit im Zahneingriff erhöht wird und Laufgeräusche reduziert werden.

Aus DE 28 48 206 A1 ist es bekannt Zahnflanken von Zahnrädern mit regelmäßig angeordneten Vertiefungen zu versehen, um einen möglichst konstanten Schmierilm zwischen im Eingriff befindlichen Zahnflanken zu erreichen, wodurch Geräuscherzeugungen vermieden werden können.

Aus US 2010/0071495 A1 ist es bekannt Zahnflanken von Zahnrädern mit unregelmäßig angeordneten Vertiefungen zu versehen, um einen möglichst hohen Schmierilm zwischen im Eingriff befindlichen Zahnflanken zu erreichen, wodurch Verschleiß reduziert werden kann.

Es besteht ein ständiges Bedürfnis für den Menschen störende Geräuschemissionen in Drehmomentübertragungseinrichtungen, insbesondere Getrieben, zu reduzieren.

Es ist die Aufgabe der Erfindung Maßnahmen aufzuzeigen, die eine Reduzierung von für den Menschen störenden Geräuschemissionen in Drehmomentübertragungseinrichtungen ermöglichen.

Die Lösung der Aufgabe erfolgt durch einen Zahn mit den Merkmalen des Anspruchs 1, ein Verzahnungselement mit den Merkmalen des Anspruchs 8, ein Windkraftgetriebe mit den Merkmalen des Anspruchs 10, ein Verfahren mit den Merkmalen des Anspruchs 11, ein Computerprogrammprodukt mit den Merkmalen des Anspruchs 14 und ein Datenagglomerat mit den Merkmalen des Anspruchs 15. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann, wobei der Schutzbereich der Erfindung durch die unabhängigen Ansprüche definiert wird.

Ein Aspekt der Erfindung betrifft einen Zahn für eine verzahnte Drehmomentübertragungsanordnung, mit einer Zahnflanke zum Drehmomentaustausch mit einer Gegenflanke eines Verzahnungspartners, wobei die Zahnflanke eine periodische verlaufende Zahnflankenkorrektur mit einer eine örtlich verlaufenden Periodenlänge T aufweisenden sinusförmige Welligkeit aufweist, wobei eine Abwicklung der sinusförmigen Welligkeit der periodisch verlaufenden Zahnflankenkorrektur eine Mittellinie definiert,, wobei die periodische Zahnflankenkorrektur mit einer räumlichen Mikrostruktur überlagert ist, wobei die Mikrostruktur bezogen auf die Mittellinie lokale Maxima und/oder lokale Minima sowie einen kürzesten Abstand t von t < T/2 zwischen den lokalen Maxima und/oder den lokalen Minima aufweist, wobei die Formgestaltung der Mikrostruktur zur Erzeugung zusätzlichen Körperschalls im laufenden Betrieb der Drehmomentübertragungsanordnung dimensioniert ist, um eine Tonalität im abgestrahlten Körperschall zu maskieren.

Die periodisch verlaufende Zahnflankenkorrektur kann insbesondere eine gemäß ISO 21771[:2007] genormte Zahnflankenkorrektur darstellen, die eine sinusförmige Welligkeit entlang der Oberfläche der Zahnflanke ausformt. Diese, in der Regel normgemäße, Zahnflankenkorrektur wird jedoch zusätzlich mit der Mikrostruktur überlagert, die sich jedoch der periodischen Zahnflankenkorrektur unterordnet. Durch die Mikrostruktur wird die periodische Zahnflankenkorrektur nicht unkenntlich gemacht, sondern bleibt gut erkennbar erhalten. Vorzugsweise kann die Mikrostruktur im Rahmen der für diese Zahnflankenkorrektur vorgesehenen Toleranzfelder zusätzlich Berge und/oder Täler in der sich ansonsten ergebenen im Wesentlichen dreidimensional verlaufenden aber in der abgewickelten Darstellung grundsätzlich ebenen Fläche der Zahnflankenkorrektur ausformen. Diese Berge und/oder Täler der Mikrostruktur sind insbesondere so stark ausgeprägt, dass sie größer als eine vorgesehene Rauigkeit sind. Gleichzeitig ist es möglich die Berge und Täler der Mikrostruktur so gering auszuprägen, dass Randbedingungen für die Formgestaltung von nach ISO 21771[:2007] zulässigen Zahnflankenkorrektur nicht verletzt werden. Insbesondere sind durch die Überlagerung der Zahnflankenkorrektur mit der Mikrostruktur die Anforderungen an die Tragfähigkeit des Zahns nach ISO 6336 eingehalten. Bei einem Vergleich eines Schnittbildes eines Zahns mit Zahnflankenkorrektur und mit Mikrostrukturen mit einem Schnittbildes eines ansonsten identischen Zahns mit der identischen Zahnflankenkorrektur aber ohne Mikrostrukturen, ergibt sich für den Oberflächenverlauf in der Schnittebene für den Zahn mit Mikrostrukturen ein stärker unregelmäßiger, insbesondere zittriger, Verlauf, vergleichbar zu einer Interferenz von sich überlagernden Wellen.

In einer unabhängigen Erfindung, die nicht unter den Wortlaut der Ansprüche fällt, aber für das Verständnis der vorliegenden Erfindung nützlich ist, handelt es sich bei der Zahnflankenkorrektur nicht um eine periodische verlaufende Zahnflankenkorrektur, die genau eine örtlich verlaufenden Periodenlänge T aufweist, sondern um eine nach ISO 21771[:2007] zulässigen Zahnflankenkorrektur, bei der es sich insbesondere nicht ausschließlich um eine periodische verlaufende Zahnflankenkorrektur, die genau eine örtlich verlaufenden Periodenlänge T aufweist, handeln muss. Die vorgesehene Zahnflankenkorrektur kann auch eine nichtperiodische Zahnflankenkorrektur sein und insbesondere eine beliebige der in ISO 21771[:2007] beschriebene Formgestaltung aufweisen. Die Mikrostruktur kann also eine beliebige nach ISO 21771[:2007] definierte Zahnflankenkorrektur überlagern. Diese unabhängige Erfindung betrifft insbesondere einen Zahn für eine verzahnte Drehmomentübertragungsanordnung, mit einer Zahnflanke zum Drehmomentaustausch mit einer Gegenflanke eines Verzahnungspartners, wobei die Zahnflanke eine Zahnflankenkorrektur nach ISO 21771[:2007] aufweist, wobei die Zahnflankenkorrektur mit einer räumlichen Mikrostruktur überlagert ist, wobei insbesondere die Mikrostruktur lokale Maxima und/oder lokale Minima sowie einen kürzester Abstand t zwischen den lokalen Maximum und/oder einem lokalen Minima aufweist, wobei die Zahnflanke zwischen einem Fuß des Zahns und einem Kopf des Zahns entlang einer Flächennormale des Kopf eine Höhe H aufweist, wobei 0,00001≤ t/H ≤ 0,10, insbesondere 0,0001≤ t/H ≤ 0,05, vorzugsweise 0,0005≤ t/H ≤ 0,01 und besonders bevorzugt 0,001≤ t/H ≤ 0,005 gilt. Diese Ausführungsform kann wie vorstehend und/oder nachstehend erläutert aus- und weitergebildet sein.

In einer weiteren unabhängigen Erfindung, die nicht unter den Wortlaut der Ansprüche fällt, aber für das Verständnis der vorliegenden Erfindung nützlich ist, ist keine Zahnflankenkorrektur vorgesehen. Die Mikrostruktur kann dadurch unmittelbar eine für eine Verzahnung vorgesehene Grundform der Zahnflanke überlagern, ohne dass diese Grundform durch eine Zahnflankenkorrektur nach ISO 21771[:2007] abgewandelt wurde. Die Zahnflanke in dieser Ausführungsform beruht insbesondere auf einer geradeverzahnten oder schrägverzahnten Grundform des Zahns für eine Evolventenverzahnung oder einer Zykloidenverzahnung. Diese unabhängige Erfindung betrifft insbesondere einen Zahn für eine verzahnte Drehmomentübertragungsanordnung, mit einer Zahnflanke zum Drehmomentaustausch mit einer Gegenflanke eines Verzahnungspartners, wobei die Zahnflanke auf einer für eine Verzahnung, insbesondere Evolventenverzahnung oder Zykloidenverzahnung, vorgesehenen Grundform beruht, wobei die Grundform von einer räumliche Mikrostruktur überlagert ist, wobei insbesondere durch lokale Maxima und/oder lokale Minima ein sich wiederholendes Muster von der Mikrostruktur ausgebildet ist, wobei vorzugsweise die lokalen Maxima und/oder lokalen Minima, insbesondere alternierend, schachbrettartig in Zeilen und Spalten angeordnet sind. Diese Ausführungsform kann wie vorstehend und/oder nachstehend erläutert aus- und weitergebildet sein.

Es wurde erkannt, dass durch die genormte, periodische Zahnflankenkorrektur zwar der Schalldruck bzw. der Schalldruckpegel reduziert werden kann, dass aber die verbliebenen Frequenzen in dem abgestrahlten Körperschall bei einem Verzahnungseingriff unter Last während einer Drehmomentübertragung in der verzahnten Drehmomentübertragungsanordnung sehr klar und für den Menschen deutlich hörbar hervortreten können. Durch die Mikrostrukturen können, die bei einer bestimmten Zahnflankenkorrektur auftretenden Haupt-Frequenzen im abgestrahlten Körperschall verwaschen werden und/oder zusätzliche Neben-Frequenzen erzeugt werden, so dass die Hauptfrequenzen nicht mehr so klar und eindeutig hervortreten. Durch die Mikrostrukturen wird dadurch vorrangig der Anteil an weißem Rauschen ("white noise") im abgestrahlten Körperschall erhöht und in einem eher geringen Ausmaß, sofern überhaupt, der Schalldruck des abgestrahlten Körperschalls verringert. Es wurde erkannt, dass eine Erhöhung des weißen Rauschens das Empfinden einer bestimmten Frequenz als Lärm im Gehör eines Menschen maskieren und überdecken kann. Obwohl sich der Schalldruck im abgestrahlten Körperschall kaum geändert hat, kann durch das Verwaschen des Hauptfrequenzen und das Erhöhen des weißen Rauschens das Lärmempfinden im menschlichen Gehör beeinflusst werden, so dass ein von Zähnen mit Zahnflankenkorrektur aber ohne Mikrostrukturen abgestrahlter Körperschall von einem Menschen als störender Lärm empfunden werden kann, während ein von Zähnen mit Zahnflankenkorrektur und mit Mikrostrukturen abgestrahlter Körperschall trotz vergleichbarem Schalldruck nicht mehr als störender Lärm empfunden wird. Durch die Formgestaltung der Mikrostruktur, insbesondere durch die Wahl der Abstände von Maxima und/oder Minima sowie deren Höhe beziehungsweise Tiefe, können die sowieso auftretenden Haupt-Frequenzen verändert und/oder maskiert werden und/oder bestimmte Frequenzen beziehungsweise Frequenzbereiche mit einer definierten Bandbreite bewusst erzeugt werden, wodurch das Ausmaß an weißem Rauschen im abgestrahlten Körperschall erhöht werden kann. Durch die Erhöhung des weißen Rauschens im vom Zahn abgestrahlten Körperschall mit Hilfe der Mikrostrukturen ist eine Reduzierung von für den Menschen störenden Geräuschemissionen in Drehmomentübertragungseinrichtungen ermöglicht.

Durch die erfindungsgemäße von der Zahnflankenkorrektur nach ISO 21771[:2007] abweichende Zahnflankenkorrektur ist es insbesondere möglich eine Tonalität im abgestrahlten Körperschall von Windkraftanlagen zu maskieren. Bei der Tonalität im abgestrahlten Körperschall handelt es sich um eine aus dem Frequenzspektrum des abgestrahlten Körperschalls bezüglich ihrer Lautstärke beziehungsweise ihres Lautstärkepegels hervorstechende Frequenz, die normgemäß nach IEC 61400-11 ermittelt werden kann. Insbesondere liegt bei der normgemäßen Grundform des Zahns mit der Zahnflankenkorrektur nach ISO 21771[:2007] nur genau eine Tonalität vor, wobei prinzipiell auch zwei, drei, vier oder noch mehr Tonalitäten vorliegen können. In der Regel ist die Anzahl der vorliegenden Tonalitäten sehr gering, insbesondere geringer als fünf, vorzugsweise geringer als drei. Durch die erfindungsgemäße Zahnflankenkorrektur kann diese Tonalität durch das erzeugte zusätzliche weiße Rauschen über einen größeren Frequenzbereich verwischt werden, das heißt maskiert werden. Dadurch kann die einzelne Tonalität von einem Menschen nicht mehr als einzelnes Störgeräusch aufgelöst werden. Durch die Maskierung der Tonalität mit dem erzeugten weißen Rauschen um die Frequenz der Tonalität herum wird diese Tonalität vom Menschen als weniger störend empfunden. Wenn das nach IEC 61400-11 ermittelt Frequenzband des im Betrieb einer zugehörigen Drehmomentübertragungsanordnung, insbesondere in einer Windkraftanlage, FFTtransformiert wird (FFT: fast Fourier transformation), ergibt sich im Bildbereich der FFT für die Tonalität eine größere Bandbreite bei der erfindungsgemäßen Zahnflankenkorrektur im Vergleich zu der normgemäßen Zahnflankenkorrektur, das heißt das der Frequenzbereich um die Frequenz der Tonalität ist breiter bei der erfindungsgemäßen Zahnflankenkorrektur im Vergleich zu der im Bildbereich spitzer abgebildeten Tonalität bei der normgemäßen Zahnflankenkorrektur. Gegebenenfalls kann das weiße Rauschen im Bereich der Tonalität die Amplitude der Frequenz der Tonalität durch destruktive Interferenz sogar reduzieren. Durch die Mikrostruktur soll nicht eine Geräuscherzeugung verhindert, sondern stattdessen Geräusche in Form eines weißen Rauschens sogar bewusst erzeugt werden, um durch die Maskierung auftretender Tonalitäten nicht den Geräuschpegel des abgestrahlten Körperschalls zu reduzieren, sondern deren Wahrnehmung als störendes Geräusch durch Menschen zu reduzieren. Anstatt die Schallerzeugung von Körperschall zu verringern, wird die Wahrnehmung des abgestrahlten Körperschalls als weniger störend angepasst, indem das Frequenzspektrum des abgestrahlten Körperschalls in einer Weise um weitere hörbare Frequenzen ergänzt wird, die eine ansonsten als störend empfundene Frequenz in ihrer Wahrnehmung als störendes Geräusch für den Menschen positiv beeinflusst. Hierbei wird die Erkenntnis ausgenutzt, dass nicht nur die Lautstärke, sondern auch das konkrete Frequenzspektrum in einem hörbaren Geräusch einen signifikanten Einfluss auf die menschliche Wahrnehmung eines Geräuschs als störend oder nicht störend hat.

Der Zahn kann ein, vorzugsweise einstückiger, Teil eines Zahnrads, einer Zahnstange oder sonstigen Bauteils sein, das in einem verzahnten Zustand ein Drehmoment mit dem mit diesem Zahn verzahnten Verzahnungspartner austauschen kann. Der Zahn weist in der Regel einen mit einem Grundkörper verbundenen Fuß und einen von dem Grundkörper wegweisenden Kopf auf, wobei der Fuß und der Kopf über die zur Drehmomentübertragung in eine bestimmte Richtung vorgesehene Zahnflanke verbunden ist. Insbesondere sind zwei in unterschiedliche Richtungen wirkende Zahnflanken vorgesehen sein, die in der jeweiligen Richtung ein Drehmoment mit dem Verzahnungspartner austauschen können. Vorzugsweise weist der Verzahnungspartner ebenfalls mindestens einen erfindungsgemäß ausgestalteten Zahn auf. Der Fuß und der Kopf können über nicht zur Drehmomentübertragung vorgesehene Stirnseiten miteinander verbunden sein. Besonders bevorzugt ist nur an denjenigen Zahnflanken die periodische verlaufende Zahnflankenkorrektur und die räumliche Mikrostruktur ausgeformt, an der im designierten Anwendungsfall auch ein Austausch eines Drehmoments erfolgt, so dass ein unnötiger Bearbeitungsaufwand eingespart werden kann.

Die Zahnflankenkorrektur ist eine bewusste Abweichung der Zahnform des Zahns, der ohne Zahnflankenkorrektur auf einem für eine bestimmte Verzahnungsart, beispielsweise Evolventenverzahnung oder Zykloidenverzahnung, vorgesehenen Grundform beruht. Unter einer Zahnflankenkorrektur wird insbesondere eine Verzahnungsmodifikationen verstanden, wie sie in ISO21771[:2007] vorgestellt und genormt ist. Die Zahnflankenkorrektur zeichnet sich durch eine Formgestaltung aus, die durch eine vergleichsweise einfache mathematische Formel, beispielsweise eine Sinus-Funktion oder Polynom-Funktion, beschrieben werden kann. Beispielsweise ist die Verzahnungsmodifikationen bezogen auf eine abgewickelte Darstellung der Grundform des Zahns ("Zahnflankenabwicklung") als eine Wellenform ausgestaltet, die eine konstante Periodendauer beziehungsweise Frequenz und eine konstante Amplitude aufweist, wodurch die Wellenform durch eine einfache Sinusfunktion beschrieben werden kann. Die als Wellenform ausgestaltete Verzahnungsmodifikationen erstreckt sich insbesondere entlang einer geraden Ausbreitungsrichtung, die in der abgewickelten Darstellung der Grundform des Zahns nicht gebogen und nicht diskontinuierlich verläuft. Quer zur Ausbreitungsrichtung ist die Wellenform in allen Schnittansichten in der abgewickelten Darstellung der Grundform des Zahns in der Regel identisch ausgeformt.

Die Ausbildung der Mikrostruktur kann bezogen auf eine Abwicklung der sinusförmigen Welligkeit der periodisch verlaufenden Zahnflankenkorrektur als Tal beziehungsweise Vertiefung und/oder als Berg beziehungsweise Erhebungen erfolgen. Da die Abwicklung der sinusförmigen Welligkeit der periodisch verlaufenden Zahnflankenkorrektur die Mittellinie definiert, ist es möglich, dass durch ein materialabtragendes Bearbeitungsverfahren, beispielsweise Laserbearbeitung, erzeugte Mikrostrukturen ausschließlich Minima ausbildende Vertiefungen erzeugen. Zudem ist es möglich, dass durch ein additives Fertigungsverfahren, beispielsweise Sputtern, bezogen auf die von der Abwicklung definierten Mittellinie ausschließlich Maxima ausbildende Erhebungen erzeugt werden.

Vorzugsweise weisen die Mikrostrukturen sowohl Minima ausbildende Vertiefungen als auch Maxima ausbildende Erhebungen auf, die besonders bevorzugt durch ein spanloses Umformverfahren, beispielsweise Prägen, erzeugt sind. Insbesondere weist die Mikrostruktur eine Mehrzahl an voneinander abgegrenzte und zueinander beabstandete Teilbereiche auf, die jeweils eine Vertiefung oder eine Erhebung ausbilden, wodurch sich insbesondere eine strukturierte Fläche ergibt, die aber entlang gedachter Linien diskontinuierlich und/oder unregelmäßig vorgesehen sind. Diese Teilbereiche weisen beispielsweise eine Fläche von 160 µm² bis 740 µm² aufweisen, wobei vorzugsweise die Fläche in der Größenordnung von 800 µm² bis 1200 µm², besonders bevorzugt 1000 µm² bis 3000 µm² oder sogar noch größer liegt, um hörbare Tonalitäten im abgestrahlten Körperschall maskieren zu können. Da die Mikrostruktur nicht für eine verbesserte Schmierung optimiert sein muss, weisen die Vertiefungen und Erhöhungen der Mikrostruktur im Vergleich zu für eine verbesserte Schmierung ausgelegte Oberflächenstrukturen deutlich unterschiedliche Abmessungen auf.

Die Mikrostruktur kann bezogen auf eine abgewickelte Darstellung der sich nach der Zahnflankenkorrektur ergebenen Form des Zahns ("Zahnflankenkorrekturabwicklung") eine Mehrzahl an örtlich verteilten lokalen Maxima und/oder Minima aufweisen, die regelmäßig aber vorzugsweise unregelmäßig zueinander angeordnet sind. Bezogen auf die Zahnflankenkorrekturabwicklung können die Maxima und Minima unterschiedliche Abstände bzw. Auslenkungen aufweisen und/oder können unterschiedlich große Abstände aufweisen. Vorzugsweise sind die Maxima und die Minima der Mikrostruktur im Gegensatz zu einer als Wellenform ausgestalteten Zahnflankenkorrektur nicht nur in einer Ausbreitungsrichtung, sondern in beide Flächenrichtungen der Zahnflanke angeordnet. Die Mikrostruktur kann insbesondere eine zweidimensionale Topologie bezogen auf die Zahnflankenkorrekturabwicklung ausbilden. Die die Maxima und/oder Minima der Mikrostruktur sind insbesondere großflächiger und/oder bezüglich ihrer Auslenkung zu der Zahnflankenkorrekturabwicklung größer als eine typische Rauigkeit, die sich nach der Erzeugung der Zahnflankenkorrektur ergibt. Die Mikrostruktur stellt keine sich nach der Erzeugung automatisch ergebene Rauigkeit der Zahnflankenkorrektur dar, sondern ist durch ein weiteres Bearbeitungsverfahren zusätzlich zu der Erzeugung der Zahnflankenkorrektur bewusst herbeigeführt. Das zur Erzeugung der Mikrostruktur verwendete Bearbeitungsverfahren kann jedoch durchaus eine willkürliche beziehungsweise stochastisch verteilte Anordnung von Maxima und/oder Minima erreichen und/oder eine geringere Rauigkeit als das zur Erzeugung der Zahnflankenkorrektur verwendete Bearbeitungsverfahren erreichen. Insbesondere ist bei der Mikrostruktur vorgesehen, dass ein lokales örtliches Maximum zu einem nächst liegendem lokalem Minimum und/oder zu einem nächst liegendem lokalem Maximum einen Abstand t aufweist und die Zahnflanke zwischen einem Fuß des Zahns und einem Kopf des Zahns entlang einer Flächennormale des Kopfs eine Höhe H aufweist, wobei 0,00001≤ t/H ≤ 0,10, insbesondere 0,0001≤ t/H ≤ 0,05, vorzugsweise 0,0005≤ t/H ≤ 0,01 und besonders bevorzugt 0,001≤ t/H ≤ 0,005 gilt.

Der Abstand t ist durch einen minimalen Abstand von Extremwerten der Mikrostruktur definiert, wobei es sich bei den betrachteten Extremwerten um Maxima und/oder Minima handeln kann. Bei einer alternierenden Anordnung von Maxima und Minima ist der Abstand t durch den Abstand der tiefsten Stelle des Minimums und die höchste Stelle des benachbarten Maximums definiert. Es ist aber auch möglich, dass bezogen auf eine Abwicklung der Grundform des Zahns beziehungsweise der Zahnflankenkorrektur zwei Maxima und/oder zwei Minima hintereinander angeordnet sind. In diesem Fall ist der Abstand t durch den Abstand der höchsten Stelle der beiden benachbarten Maxima beziehungsweise durch den Abstand der tiefsten Stelle der beiden benachbarten Minima definiert. Bei Formgestaltungen der Mikrostruktur, bei denen das Maximum und/oder das Minimum nicht durch einen einzelnen Punkt, sondern ein Plateau, eine Linie oder Ähnliches ausgebildet ist, ist der Abstand t durch die kürzestes Strecke entlang einer Gerade, welche zumindest zwei Punkte des Maximums beziehungsweise des Minimums über einen Höhenunterschied hinweg verbindet.

Der Abstand t ist insbesondere kleiner als eine zu erwartende Verformung des Zahns unter Last. Vorzugsweise ist der Abstand t um mindestens eine Zehnerpotenz kleiner als eine zu erwartende Verformung des Zahns unter Last. Insbesondere gilt 0,5 µm ≤ t ≤ 25 µm, vorzugsweise 1 µm ≤ t ≤ 20 µm, weiter bevorzugt 5 µm ≤ t ≤ 15 µm und besonders bevorzugt 8 µm ≤ t ≤ 12 µm, beispielsweise t = 10 µm ± 1 µm.

Insbesondere gilt 0,00005 ≤ t/T ≤ 0,49, insbesondere 0,0001 ≤ t/T ≤ 0,05, bevorzugt 0,0005 ≤ t/T ≤ 0,01 und besonders bevorzugt 0,001 ≤ t/T ≤ 0,005. Dadurch können sich innerhalb einer einzigen Periodendauer T der Zahnflankenkorrektur sich um den Faktor fünf, zehn oder noch mehr lokale Maxima und/oder Minima der Mikrostruktur befinden. Dadurch lassen sich von einem Menschen hörbare Schwebungen im abgestrahlten Körperschall vermeiden und das Ausmaß an weißen Rauschen erhöhen.

Vorzugsweise weist die Zahnflankenkorrektur eine Amplitude A in Richtung einer Flächennormalen der, insbesondere nicht zahnflankenkorrigierten, Zahnflanke und die Mikrostruktur zu der Mittellinie der Zahnflankenkorrektur eine Auslenkung a in Richtung einer Flächennormalen der Zahnflanke auf, wobei 0,00005 ≤ a/A ≤ 0,50, insbesondere 0,0001 ≤ a/A ≤ 0,10, bevorzugt 0,0005 ≤ a/A ≤ 0,05 und besonders bevorzugt 0,001 ≤ a/A ≤ 0,01 gilt. Die Amplitude A der Zahnflankenkorrektur wird bezogen auf den Grundkörper des Zahns ohne Zahnflankenkorrektur und in Richtung der jeweiligen Flächennormalen dieses Zahns entlang des betrachteten Verlaufs der Zahnflankenkorrektur bestimmt. Vorzugsweise ist die Amplitude der Zahnflankenkorrektur in Richtung der Flächennormale und entgegen der Flächennormale gleich groß und schwingt um eine Mittellinie der Zahnflankenkorrektur, die mit der Oberfläche des Zahns ohne Zahnflächenkorrektur zusammenfällt. Die Auslenkung der Mikrostruktur, also die Höhe des lokalen Maximums und/oder die Tiefe des lokalen Minimums, im Vergleich zu der Zahnflankenkorrekturabwicklung ist dadurch klein, so dass der technische Effekt der Zahnflankenkorrektur nicht beeinträchtigt wird. Außerdem können die Minima der Mikrostruktur so klein sein, dass ein Schmierstoff, insbesondere Schmieröl, leicht durch Adhäsion und/oder Kapillareffekte an der Zahnflanke haften können. Unter Last können die Maxima der Mikrostruktur elastisch verformt werden, wodurch ein Dämpfungseffekt und eine erhöhte Laufruhe erreicht werden können.

Die Mikrostruktur kann zu einer Zahnflankenkorrekturabwicklung und/oder zu einer Zahnflankenabwicklung die/eine Auslenkung a in Richtung einer Flächennormalen der Zahnflanke aufweisen, wobei insbesondere die Auslenkung a kleiner als eine zu erwartende Verformung des Zahns unter Last ist. Vorzugsweise ist die Auslenkung a um mindestens eine Zehnerpotenz kleiner als eine zu erwartende Verformung des Zahns unter Last. Insbesondere gilt 0,5 µm ≤ a ≤ 25 µm, vorzugsweise 1 µm ≤ a ≤ 20 µm, weiter bevorzugt 5 µm ≤ a ≤ 15 µm und besonders bevorzugt 8 µm ≤ a ≤ 12 µm, beispielsweise a = 10 µm ± 1 µm. Durch den Abstand a zur jeweiligen abgewickelten Fläche wird die Maxima Höhe eines Maximums und/oder die maximale Tiefe eines Minimums zur abgewickelten Fläche als Referenzhöhe.

Besonders bevorzugt ist vorgesehen, dass die Zahnflankenkorrektur und die Mikrostruktur sich sowohl in Breitenrichtung als auch in Längsrichtung der Zahnflanke, insbesondere der gesamten Zahnflanke, flächig gleichartig erstrecken. Die Breitenrichtung verläuft parallel zu einer designierten Drehachse eines zugehörigen Zahnrads, während die Längsrichtung vom Zahnfuss bis zum Zahnkopf verläuft. Die Breitenrichtung und die Längsrichtung sind im Wesentlichen rechtwinkelig zueinander ausgerichtet. Voneinander abgrenzbare Teilflächen der Zahnflanke, die sich beispielsweise durch ein unterschiedliches Reflektionsverhalten von Licht voneinander unterscheiden lassen, sind dadurch vermieden. Dadurch kann verhindert werden, dass durch einen sprungartigen Wechsel der Oberflächenbeschaffenheit zwischen zwei Teilbereichen der Zahnflanke vorab nur schwer vorhersagbare Effekte auf das Geräuschverhalten auftreten.

Insbesondere ist ein Verlauf der Mikrostruktur über die Zahnflankenkorrektur aperiodisch, insbesondere willkürlich und/oder stochastisch verteilt, ausgeformt. Durch die nicht periodische Verteilung der Maxima und Minima der Mikrostruktur kann eine durch die Mikrostruktur selbst verursachte Schwingung, die zu einem hörbaren abgestrahlten Körperschall führen könnte, vermieden werden. Stattdessen kann das Ausmaß an weißem Rauschen erhöht werden.

Vorzugsweise ist vorgesehen, dass die Mikrostruktur so ausgestaltet ist, dass bei einem Vergleich eines Zahns mit diesen Mikrostrukturen mit einem ansonsten identischen Zahn ohne Mikrostrukturen eine Fast-Fourier-Transformation ("FFT") eines von dem Zahn mit Mikrostrukturen abgegeben Körperschalls bei einer ansonsten identischen Drehmomentübertragung in derselben verzahnten Drehmomentübertragungsanordnung im Bildbereich der Fast-Fourier-Transformation eine größere Bandbreite des mindestens einen Frequenzmaximum der Tonalität aufweist. Der erfindungsgemäße Zahn weist dadurch im Vergleich zu einem normgemäßen und nicht mit einer Mikrostruktur überlagerten Zahn eine abweichende akustische Eigenschaft auf, die eine Maskierung der hörbaren Tonalität durch eine mit Hilfe der Mikrostruktur erreichten vergrößerten Bandbreite der Tonalität im Bildbereich der FFT enthält. Der abgegebene Körperschall kann durch ein nach IEC 61400-11 ermitteltes Frequenzspektrum abgebildet werden, das im Bildbereich der FFT betrachtet wird. Durch die größere Bandbreite sind bei dem Zahn mit Mikrostruktur die niedrigeren und höheren benachbarten umgebenden Frequenzlinien, beispielsweise in einem Frequenzbereich +/- 100 Hz, des betrachteten Frequenzmaxima der Haupt-Frequenz angehoben, so dass eine Maskierung auf der linken und rechten Seite des Frequenzmaxima erhöht ist. Zusätzlich oder alternativ sind durch die Mikrostruktur zu den auch ohne Mikrostruktur auftretenden Haupt-Frequenzen zusätzliche Neben-Frequenzen erzeugt, wobei insbesondere die Amplitude der Neben-Frequenz deutlich, beispielsweise um eine Zehnerpotenz, kleiner als die Amplitude der im Bildbereich nächsten Haupt-Frequenz ist. Insbesondere weist auch die Neben-Frequenz eine größere Bandbreite als die Haupt-Frequenz ohne Mikrostruktur auf. Ohne Mikrostruktur ergeben sich in dem vom Zahn unter Last abgestrahlten Körperschall diskrete einander überlagernde Frequenzen, die jeweils im Bildbereich der FFT als ein sehr schmaler Amplituden-Peak bei einer bestimmten Frequenz mit einer allenfalls nur sehr kleinen Bandbreite der Frequenz erscheinen. Durch die Mikrostrukturen kann jedoch diese Frequenz verwaschen werden, so dass sich die Bandbreite der Frequenz verbreitert und sich leichte Abweichungen dieser Frequenz ergeben. Die ursprüngliche Haupt-Frequenz, die immer noch das Maximum der jeweiligen Bandbreite darstellt, ist dadurch weniger trennscharf und stärker verrauscht. Die jeweilige Frequenz wird dadurch von dem menschlichen Gehör als weniger störend wahrgenommen.

Besonders bevorzugt beruht die Zahnflanke auf einer geradeverzahnten oder schrägverzahnten Grundform für eine Evolventenverzahnung oder einer Zykloidenverzahnung. Die Überlagerung der Zahnflankenkorrektur mit der Mikrostruktur kann auf einer Vielzahl unterschiedlicher Grundformen des Zahns angewendet werden. Eine Beschränkung auf eine bestimmte Grundform des Zahns ist nicht erforderlich.

Ein weiterer Aspekt der Erfindung betrifft ein Verzahnungselement, insbesondere Zahnrad oder Zahnstange, für eine verzahnte Drehmomentübertragungsanordnung mit einer Mehrzahl an Zähnen, die wie vorstehend beschrieben aus- und weitergebildet sein können, wobei die Zahnflankenkorrektur eine Amplitude A in Richtung einer Flächennormalen der nicht zahnflankenkorrigierten Zahnflanke und die Mikrostruktur zu der Mittellinie der Zahnflankenkorrektur eine Auslenkung a in Richtung einer Flächennormalen der Zahnflanke aufweist, wobei für mindestens eine Zahnflanke verschiedener Zähne bezüglich ihres Abstands t und/oder ihrer Auslenkung a unterschiedlich ausgeformte Mikrostrukturen ausgebildet sind und/oder die periodische verlaufende Zahnflankenkorrektur dieser Zähne, insbesondere bezüglich der Periodenlänge T und/oder eines Phasenversatzes zwischen diesen Zähnen, im Wesentlichen unterschiedlich ausgeformt ist. Durch die Erhöhung des weißen Rauschens im vom Zahn des Verzahnungselements abgestrahlten Körperschall mit Hilfe der Mikrostrukturen ist eine Reduzierung von für den Menschen störenden Geräuschemissionen in Drehmomentübertragungseinrichtungen ermöglicht.

In einer weiteren Ausführungsform ist eine Zahnteilung des Verzahnungselements in Umfangsrichtung veränderlich. Das heißt ein Abstand zwischen zwei Zähnen in Umfangsrichtung kann sich unterscheiden. Der Unterschied in Umfangsrichtung beträgt beim Umfangswinkel insbesondere weniger als 1°. Ein periodisches Geräuschverhalten kann dadurch reduziert werden, wodurch das Frequenzspektrum im abgestrahlten Körperschall und damit auch das Ausmaß an weißem Rauschen erhöht werden kann.

Insbesondere weisen die Zahnflanken mit unterschiedlich ausgeformten Mikrostrukturen eine im Wesentlichen gleiche mittlere Rauheit Rₐ und/oder eine im Wesentlichen gleiche quadratische Rauheit R_{q} aufweisen. Dadurch ist es möglich, dass einander nachfolgende Zähne des Verzahnungselements ein zumindest leicht unterschiedliches Geräuschverhalten aufweisen. Insbesondere bei hohen Drehzahlen, wenn sich die zeitlich nachfolgenden Verzahnungseingriffe schnell abwechseln, kann dadurch das Ausmaß an weißem Rauschen weiter erhöht werden.

Ein weiterer Aspekt der Erfindung betrifft ein Windkraftgetriebe für eine, insbesondere in bewohntem Raum aufgestellte, Windkraftanlage, mit mindestens einem Verzahnungselement, das wie vorstehend beschrieben aus- und weitergebildet sein kann. Durch die Erhöhung des weißen Rauschens im vom Zahn abgestrahlten Körperschall mit Hilfe der Mikrostrukturen ist eine Reduzierung von für den Menschen störenden Geräuschemissionen in dem Windkraftgetriebe ermöglicht. Dadurch ist es möglich eine Windkraftanlage näher zu einem bewohnten Raum zu positionieren, ohne hierbei die Bewohner und Bewohnerinnen durch als Lärm empfundenen Schall zu stören. Dies ermöglicht es die Anzahl an Inland-Windkraftanlagen auch in besiedelten Gebieten zu erhöhen und den Anteil an regenerativ erzeugter Energie im Energiemix einer Region zu erhöhen, ohne dass dadurch die Anwohner und Verbraucher gestört werden. Insbesondere kann dadurch der Anteil an lokal erzeugter Energie für benachbarte Verbraucher erhöht werde, wodurch Leistungsverluste infolge einer Energieübertragung über große Strecken vermieden werden können.

Ein weiterer Aspekt der Erfindung betrifft ein Verfahren zur Herstellung eines Zahns, der wie vorstehend beschrieben aus- und weitergebildet sein kann, oder eines Verzahnungselements, das wie vorstehend beschrieben aus- und weitergebildet sein kann, bei dem ein Zahn, dessen Zahnform auf einer Evolventenverzahnung oder Zykloidenverzahnung beruht, an mindestens einer Zahnflanke mit einer periodisch verlaufenden Zahnflankenkorrektur und einer die Zahnflankenkorrektur überlagernden räumlichen Mikrostruktur versehen wird, wobei die Zahnflankenkorrektur durch ein mechanisches spanabhebendes Verfahren, insbesondere Schleifen, Polieren und/oder Honen, erzeugt wird. Die Zahnflankenkorrektur kann in herkömmlicher Weise erfolgen, ohne dass die Erzeugung der Mikrostrukturen hierauf einen negativen Einfluss hat. Durch die Erhöhung des weißen Rauschens im vom Zahn abgestrahlten Körperschall mit Hilfe der Mikrostrukturen ist eine Reduzierung von für den Menschen störenden Geräuschemissionen in Drehmomentübertragungseinrichtungen ermöglicht.

Vorzugsweise werden die Mikrostrukturen zeitlich nach der Erzeugung der Zahnflankenkorrektur erzeugt. Zusätzlich oder alternativ kann die Erzeugung der Grundform des Zahns und die Erzeugung der Zahnflankenkorrektur zumindest teilweise gleichzeitig erfolgen. Dies ermöglicht es in Massenproduktion Zähne mit Zahnflankenkorrektur herzustellen und nur für diejenigen Anwendungsfälle, in denen eine Lärmbelästigung von Menschen durch abgestrahlten Körperschall drohen könnte, in einem zusätzlichen Veredelungsschritt die Mikrostruktur zu erzeugen. In Anwendungsfällen, in denen eine Lärmbeeinträchtigung von Menschen nicht zu befürchten ist, beispielsweise bei für Offshore-Windkraftanagen vorgesehenen Windkraftgetrieben, kann der Veredelungsschritt der Erzeugung von Mikrostrukturen eingespart werden. Dies ermöglicht eine kosteneffiziente Herstellung.

Besonders bevorzugt werden die Mikrostrukturen durch Prägen, Laserbearbeitung und/oder Erodieren erzeugt. Beim Prägen können in die nach der Zahnflankenkorrektur vorliegende Oberfläche der Zahnflanke Strukturen mechanisch erzeugt werden, beispielsweise durch Stechen, Ritzen, Rändeln und/oder Anpressen beziehungsweise Abwälzen einer Negativform der Mikrostruktur. Insbesondere durch eine Laserbearbeitung kann durch einen punktuellen Energieeintrag ein Teil aus der Oberfläche der Zahnflanke entfernt werden, beispielsweise durch Verdampfen. Über eine geeignete Fokussierung eines Laserstrahls kann leicht die Größe und/oder die Tiefe sowie gegebenenfalls der lokale Energieeintrag eingestellt werden. Mit Hilfe der Laserbearbeitung sind nahezu beliebige Formgestaltungen und Verteilungen von Maxima und Minima für die Mikrostruktur erzeugbar. Beim Erodieren kann beispielsweise durch Funken-Erosion mit Hilfe eines lokal begrenzten Energieeintrags ein Teil des Materials des Zahns aus der Oberfläche der Zahnflanke entfernt werden. Bei der chemischen Erosion kann dies durch eine chemische Reaktion, beispielsweise durch Ätzen erfolgen.

Ein weiterer Aspekt der Erfindung betrifft ein Computerprogrammprodukt umfassend Befehle, die bei der Ausführung des Programms durch eine Datenverarbeitungseinrichtung einer Werkzeugmaschine diese veranlassen, das Verfahren, das wie vorstehend beschrieben aus- und weitergebildet sein kann, auszuführen. Durch die Erhöhung des weißen Rauschens im vom Zahn abgestrahlten Körperschall mit Hilfe der Mikrostrukturen ist eine Reduzierung von für den Menschen störenden Geräuschemissionen in Drehmomentübertragungseinrichtungen ermöglicht.

Ein Aspekt betrifft ferner ein Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in dem Zahn, der wie vorstehend beschrieben aus- und weitergebildet sein kann, oder in dem Verzahnungselement, das wie vorstehend beschrieben aus- und weitergebildet sein kann, vorgesehenen Bestandteile, wobei die Datenpakete dazu hergerichtet sind bei einer Verarbeitung durch eine Datenverarbeitungseinrichtung zum Betrieb einer Werkzeugmaschine zur additiven Fertigung von Vorrichtungen eine additive Herstellung der Bestandteile des Zahns oder des Verzahnungselements, insbesondere durch 3D-Druck, durchzuführen und/oder bei einer Verarbeitung durch eine Datenverarbeitungseinrichtung zur Durchführung einer technischen Simulation eine Simulation der Funktionsweise des Zahns oder des Verzahnungselements durchzuführen und hierbei erzeugte Simulationsergebnisse für eine weitere Verwendung auszugeben, insbesondere zu dem Zweck einen Dauerfestigkeitsnachweis in Abhängigkeit veränderlicher Lasten und/oder veränderlicher Temperaturbelastungen zu erbringen und gegebenenfalls mit an einer real produzierten erfindungsgemäßen Vorrichtung und/oder an einem Prototyp der erfindungsgemäßen Vorrichtung ermittelten Messdaten zu vergleichen. Die Datenpakete des Datenagglomerat sind an die erfindungsgemäße Ausgestaltung der jeweiligen vorstehend beschriebenen erfindungsgemäßen Vorrichtung speziell angepasst, um die erfindungsgemäße Wechselwirkung der Bestandteile der erfindungsgemäßen Vorrichtung bei der Verarbeitung in der Datenverarbeitungseinrichtung adäquat abbilden zu können. Die Datenpakete können insbesondere räumlich verteilt gespeichert sein, aber derart aneinander angepasst sein, dass in dem Fall, dass alle Datenpakete in einer gemeinsamen Datenverarbeitungseinrichtung zusammengeführt sind, das so zusammengesetzte Datenagglomerat alle erforderlichen Daten für eine additive Fertigung und/oder eine technische Simulation mit Hilfe der Datenverarbeitungseinrichtung für die erfindungsgemäße Vorrichtung bereitstellt. Beispielsweise sind die Datenpakete jeweils separate Teile einer Datenbibliothek ("Library"), die zur Ausbildung des Datenagglomerats zusammengeführt und bezüglich ihrer relativen Abmessungen zueinander und/oder absoluten Abmessungen und/oder Werkstoffeigenschaften korrespondierend zu der jeweiligen erfindungsgemäßen Vorrichtung aneinander angepasst sind. Das Datenagglomerat kann in der Art eines sogenannten "digital twin" eine virtuelle Verkörperung der jeweiligen erfindungsgemäßen Vorrichtung darstellen, die eine virtuelle Untersuchung in Form einer Simulation oder eine reale Vergegenständlichung mit Hilfe eines additiven Fertigungsverfahrens ermöglicht. Ein derartiger digitaler Zwilling ist beispielsweise in US 2017/286572 A1 dargestellt, auf dessen Offenbarungsgehalt als Teil der Erfindung hiermit Bezug genommen wird.

Wenn die Datenverarbeitungseinrichtung der Werkzeugmaschine das Datenagglomerat verarbeitet, wird die erfindungsgemäße Vorrichtung hergestellt, so dass nach der Verarbeitung des Datenagglomerats in der Datenverarbeitungseinrichtung die erfindungsgemäße Vorrichtung, zumindest in Form eines Prototyps, erhalten wird.

Insbesondere kann jeweils ein Datenpaket einen separat ausgeführten Bestandteil der jeweiligen zugeordneten erfindungsgemäßen Vorrichtung abbilden, so dass die einzelnen Bestandteile in ihrer Relativlage und/oder Relativbeweglichkeit leicht tatsächlich und/oder virtuell zusammengesetzt werden können, um die erfindungswesentlichen Wechselwirkungen zu realisieren. Insbesondere ist es möglich mit Hilfe der jeweiligen Datenpakete die verschiedenen Bestandteile der jeweiligen Vorrichtung separat und gegebenenfalls aus unterschiedlichen Materialen durch additive Fertigung zu erzeugen und nachfolgend zu einem Prototyp der jeweiligen Vorrichtung zusammenzusetzen. Die Aufteilung der Daten des Datenagglomerats auf verschiedene Datenpakete ermöglicht dadurch in einfacher Weise eine sequenzielle additive Fertigung von relativ zueinander bewegbaren Bestandteilen der jeweiligen Vorrichtung in Form eines Bausatzes ("Kit of parts"), der dazu hergerichtet ist für die erfindungsgemäße Wechselwirkung der Bestandteile des Prototyps für die Lösung des der Erfindung zu Grunde liegenden Problems nur noch sinnfällig zusammengesetzt zu werden.

Zusätzlich oder alternativ ist es möglich mit Hilfe der Datenpakete des Datenagglomerats in einer virtuellen Umgebung während einer technischen Simulation die einzelnen Bestandteile der jeweiligen Vorrichtung, ihre Wechselwirkungen, den physikalische Zustand und/oder die Veränderung physikalischer Parameter in Abhängigkeit verschiedener Randbedingungen und/oder über die Zeit der zugehörigen erfindungsgemäßen Vorrichtung zu berechnen und/oder vorherzusagen sowie für die Überprüfung, ob die erfindungsgemäße Vorrichtung auf Basis der angenommenen Ausgestaltung und unter Berücksichtigung der angenommen simulierten Einflüsse für den beabsichtigten Einsatzzweck gut genug geeignet ist, weiterzuverwenden. Wenn das Datenagglomerat von einer die Simulationsumgebung abbildender Datenverarbeitungseinrichtung verarbeitet wird, ist es möglich das Verhalten der erfindungsgemäßen Vorrichtung unter Berücksichtigung von, sich insbesondere verändernden, Randbedingungen untersuchen zu können. Dadurch ist es beispielsweise möglich Fliehkrafteffekte bei einzelnen Bestandteilen der erfindungsgemäßen Vorrichtung in Abhängigkeit von verschiedenen statischen und/oder dynamischen Lasten und/oder unterschiedlichen Betriebstemperaturen zu untersuchen, wobei derartige Simulationsergebnisse in die Erstellung eines Dauerfestigkeitsnachweis einfließen können. Vorzugsweise werden die nach der Verarbeitung des Datenagglomerats in der Datenverarbeitungseinrichtung für die Simulationsumgebung erhaltenen Simulationsergebnisse gespeichert, um diese mit an einer real produzierten erfindungsgemäßen Vorrichtung und/oder an einem Prototyp der erfindungsgemäßen Vorrichtung ermittelten Messdaten zu vergleichen. Dadurch ist es möglich die Güte der mit Hilfe des Datenagglomerats erhaltenen Simulationsergebnisse zu beurteilen und/oder, insbesondere bei besonders starken Abweichungen, Messfehler und/oder eine fehlerhafte Messung zu identifizieren. Eine zerstörungsfreie Qualitätskontrolle der erfindungsgemäßen Vorrichtung ist dadurch vereinfacht und verbessert.

Durch das Datenagglomerat ist eine kostengünstige Herstellung von Prototypen und/oder eine kostengünstige computerbasierte Simulation ermöglicht, um die Funktionsweise des Zahns und/oder des Verzahnungselements zu studieren, Probleme im konkreten Anwendungsfall zu identifizieren und Verbesserungen zu finden. Die Lösung der der Erfindung zugrunde liegenden Aufgabe kann mit Hilfe des Datenagglomerats leicht und kostengünstig überprüft werden.

Nachfolgend wird die Erfindung unter Bezugnahme auf die anliegenden Zeichnungen anhand bevorzugter Ausführungsbeispiele exemplarisch erläutert. Wenn ein dem konkreten Ausführungsbeispiel ein Merkmal in Kombination mit einem anderen Merkmal dargestellt wird, dient dies nur der vereinfachten Darstellung der Erfindung anhand des Ausführungsbeispiels und soll keinesfalls bedeuten, dass dieses Merkmal nicht auch ohne das andere Merkmal eine Weiterbildung der Erfindung sein kann, wobei der Schutzbereich der Erfindung durch die unabhängigen Ansprüche definiert wird. Es zeigen:
Fig. 1: eine schematische perspektivische Ansicht eines Zahns,
Fig. 2: eine schematische Detailansicht des Details II aus Fig. 1,
Fig. 3: eine schematische Schnittansicht des Zahns aus Fig. 2 in einer Zahnflankenabwicklung,
Fig. 4: eine schematische Schnittansicht des Zahns aus Fig. 2 in einer Zahnflankenkorrekturabwicklung,
Fig. 5: eine schematische Schnittansicht einer ersten Alternative zu dem Zahn aus Fig. 2 in einer Zahnflankenkorrekturabwicklung,
Fig. 6: eine schematische Schnittansicht einer zweiten Alternative zu dem Zahn aus Fig. 2 in einer Zahnflankenkorrekturabwicklung,
Fig. 7 a) - l): schematische perspektivische Ansichten eines Zahns mit verschiedenen Formgestaltungen von Mikrostrukturen,
Fig. 8: eine schematische qualitative Darstellung eines Bildbereichs einer FFT eines Frequenzspektrums eines Windkraftgetriebes mit normgemäßen Zähnen und
Fig. 9: eine schematische qualitative Darstellung des Frequenzspektrums aus Fig. 8, das sich bei einem Windkraftgetriebe mit erfindungsgemäßen Zähnen ergeben könnte.

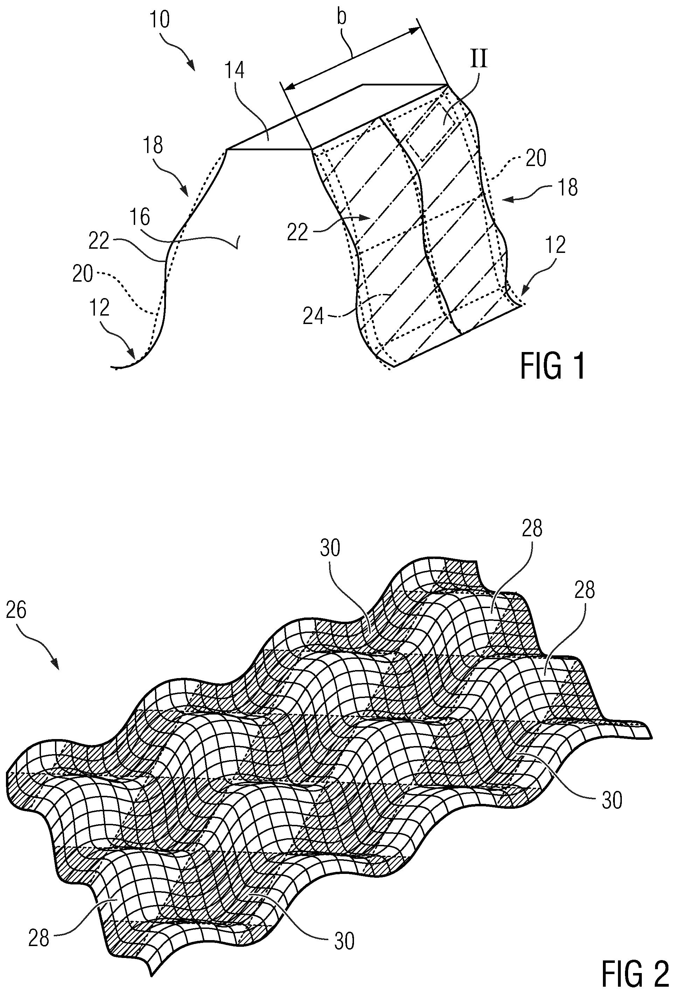

Der in Fig. 1 dargestellte Zahn 10 kann insbesondere Teil eines Zahnrads für ein Windkraftgetriebe einer (Inland-)Windkraftanlage sein, bei dem eine Beeinträchtigung von Menschen durch Lärm vermieden werden soll. Der Zahn 10 weist einen Fuß 12 auf, der mit einem scheibenförmigen Körper eines Zahnrads einstückig verbunden sein kann, sowie einen nach radial außen weisenden Kopf 14 auf. Der Fuß 12 und der Kopf 14 können über in axialer Richtung weisende Stirnfläche 16 verbunden sein. Zudem kann der Fuß 12 und der Kopf 14 über in tangentialer Richtung weisende Zahnflanken 18 verbunden sein. Im dargestellten Ausführungsbeispiel weist der Zahn 10 eine Grundform 20 auf, wie sie für eine Evolventenverzahnung verwendet wird. Mindestens eine Zahnflanke 18, vorzugsweise beide Zahnflanken 18 sind mit einer genormten Zahnflankenkorrektur 22 versehen, bei der er sich im dargestellten Ausführungsbeispiel um eine periodische verlaufende Wellenform handelt. Im dargestellten Ausführungsbeispiel verläuft eine Wellenfront der als Wellenform ausgestalteten Zahnflankenkorrektur 22 zu einer Breite b des Zahns 10 leicht angeschrägt, so dass auch durch jeweils phasengleiche Punkte der Wellenform verlaufende Geraden 24 angeschrägt verlaufen. Alternativ kann die Zahnflankenkorrektur 22 als eine beliebige Zahnflankenkorrektur 22 nach ISO 21771[:2007] ausgestaltet sein.

So wie die Grundform 20 des Zahns 10 von der Zahnflankenkorrektur 22 überlagert ist, ist wiederum die Zahnflankenkorrektur 22 von einer Mikrostruktur 26 überlagert, die in Fig. 2 im Detail dargestellt ist. In der Zahnflankenkorrekturabwicklung definiert die Zahnflankenkorrektur 22 eine Mittellinie, die als Referenz für die Formgestaltung der Mikrostruktur 26 verwendet wird. Das in Fig. 2 dargestellte Detail zeigt einen Teil der Zahnflanke 18, der sich in etwa über 90% einer Viertel-Periodendauer (T/4) der als Wellenform ausgestalteten Zahnflankenkorrektur 22 erstreckt. In dem zur vereinfachten Erläuterung in Fig. 2 dargestellten Ausführungsbeispiel der Mikrostruktur 26 sind Maxima 28 und Minima 30 in einer rechteckigen Zeilen-und-Spalten-Struktur, insbesondere schachbrettartig und/oder vergleichbar zu Kacheln, alternierend nebeneinander und hintereinander angeordnet. Alternativ kann die Mikrostruktur 26 beispielsweise nur Maxima 28, nur Minima 30 oder sowohl Maxima 28 oder auch Minima 30 aufweisen. Die Maxima 28 und Minima 30 können einer Sinusstruktur folgen, wobei die Maxima 28 und Minima 30 zueinander jeweils genau gleiche Abstände t und genau gleiche Auslenkungen a aufweisen sowie genau gleiche Flächenbereiche innerhalb der Zahnflanke 18 einnehmen. Vorzugsweise ist der Verlauf der Zeilen und Spalten der Mikrostruktur 26 zu der Wellenfront der Zahnflankenkorrektur 22 und den Gerade 24 angeschrägt ausgerichtet. Eine derartige Mikrostruktur 26 kann beispielsweise durch Einprägen einer abrollenden Negativform an der nach dem Erzeugen der Zahnflankenkorrektur 22 vorliegenden Oberfläche der Zahnflanke 18 hergestellt werden.

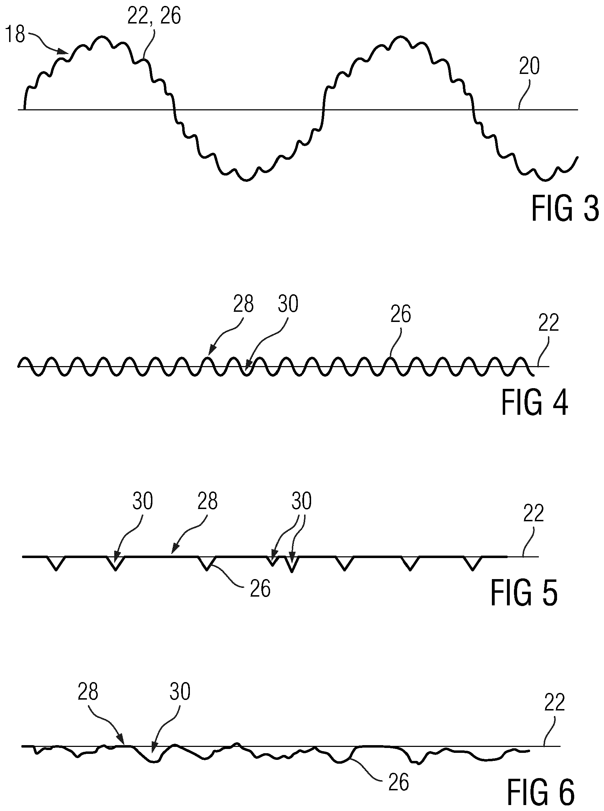

Wie in Fig. 3 dargestellt ist, ergibt sich für die Zahnflankenkorrektur 22 aufgrund der überlagerten Mikrostruktur 26 ein zittriger Verlauf, der sich durch die Interferenz der Mikrostruktur 26 mit einer deutlich geringeren Periodendauer und deutlich geringeren Amplitude im Vergleich zu der Periodendauer und Amplitude der als Wellenform ausgestalteten Zahnflankenkorrektur 22 ergibt. Wie in Fig. 4 dargestellt ist, kann die Mikrostruktur 26 einen sinusförmigen Verlauf aufweisen.

Wie in Fig. 5 dargestellt ist, kann die Mikrostruktur 26 auch einen nicht-sinusförmigen Verlauf aufweisen, beispielsweise indem die Minima 30 der Mikrostruktur 26 durch Laserbearbeitung oder Funkenerosion erzeugt wurden. Die Abstände zwischen den Minima 30 können gleich groß sein, so dass sich ein periodischer, aber kein sinusförmiger Verlauf für die Mikrostruktur ergibt. Vorzugsweise sind die Abstände zwischen den Minima 30 unterschiedlich groß und in definierten Grenzen willkürlich vorgesehen. Insbesondere ist die Tiefe der jeweiligen Minima 30 unterschiedlich.

Wie in Fig. 6 dargestellt ist, kann die Mikrostruktur 26 bezüglich der Position der Minima 30 sowie deren Größe und Tiefe bzw. Höhe auch stark willkürlich und stochastisch verteilt ausgeformt sein. Eine derartige Mikrostruktur 26 kann beispielsweise durch chemische Erosion, beispielsweise durch Ätzen, erzeugt sein.

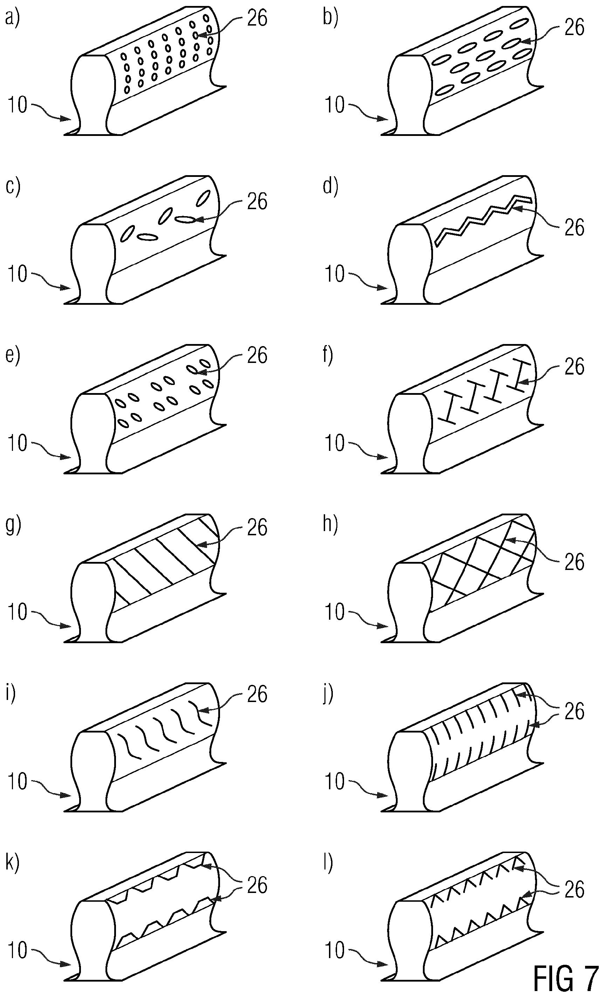

Wie in Fig. 7 a) - l) dargestellt, kann die Mikrostruktur 26 viele verschiedene Formgestaltungen und/oder Muster aufweisen. Der jeweilige Zahn 10 kann insbesondere mit oder auch ohne Zahnflankenkorrektur 22 nach ISO 21771[:2007] ausgeführt sein. Die jeweilige Mikrostruktur 26 kann beispielsweise nur Maxima 28, nur Minima 30 oder sowohl Maxima 28 oder auch Minima 30 aufweisen, wobei die Maxima 28 und Minima 30 insbesondere alternierend zueinander angeordnet sein können. Es ist aber auch möglich, dass der kürzeste Abstand t durch zwei nachfolgende Maxima 28 und/oder Minima 30 definiert ist.

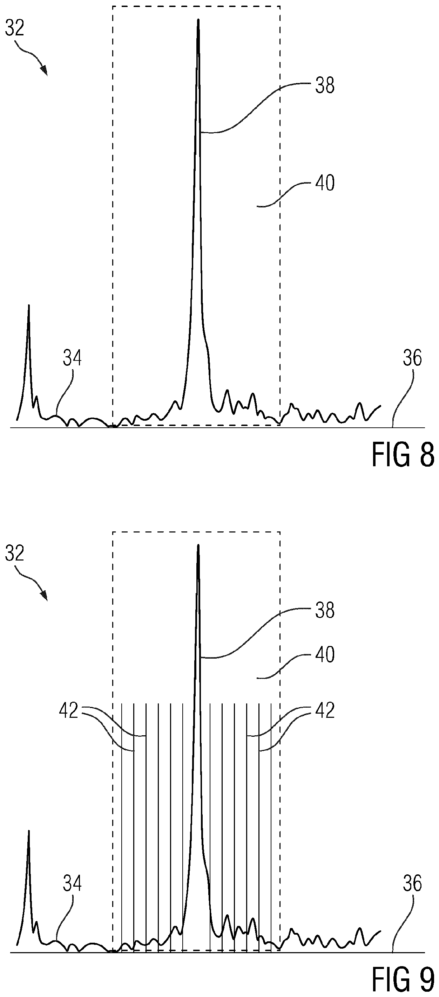

Wie in Fig. 8 dargestellt ist, kann ein nach IEC 61400-11 ermitteltes Frequenzspektrum 32 eines Windkraftgetriebes mit normgemäßen Zähnen einen Amplitudenverlauf 34 über einer Frequenz 36 aufweisen. Hierbei sticht eine bestimmte Frequenz bezüglich ihrer Amplitude im Vergleich zu den anderen Frequenzen deutlich heraus und stellt eine Tonalität 38 im gemessenen abgestrahlten Körperschall dar. Im einem Frequenzbereich 40 um die Tonalität 38 herum liegen nur Frequenzen mit sehr geringer Amplitude vor.

Wie in Fig. 9 dargestellt ist, kann im Vergleich zu dem in Fig. 8 dargestellten Frequenzspektrum 32 innerhalb des Frequenzbereichs 40 um die Tonalität 38 als Haupt-Frequenz herum durch die erfindungsmäßen Zähne 10 mehrere Neben-Frequenzen 42 in Art eines weißen Rauschens erzeugt werden. Diese Neben-Frequenzen 42 sind in ihrer Amplitude geringer als die Tonalität im Bereich der Haupt-Frequenz, aber größer als die meisten anderen Frequenzen in dem Frequenzspektrum 32. Wenn die Tonalität 38 als Haupt-Frequenz so laut ist, dass sie hörbar ist, sind die Neben-Frequenzen 42 ebenfalls ausreichend hörbar, um die Tonalität zu maskieren. Die Neben-Frequenzen 42 können Seitenbänder für die Tonalität 38 ausbilden, so dass sich im Bildbereich der FFT die Bandbreite der Tonalität 38 verbreitert, was aus Gründen der vereinfachten Darstellung der Neben-Frequenzen 42 in Fig. 9 abweichend zu der sich im Bildbereich der FFT eigentlich ergebenen Darstellung allerdings nur angedeutet ist.

## Patentansprüche

1. Zahn (10) für eine verzahnte Drehmomentübertragungsanordnung, mit
einer Zahnflanke (18) zum Drehmomentaustausch mit einer Gegenflanke eines Verzahnungspartners,
wobei die Zahnflanke (18) eine periodische verlaufende Zahnflankenkorrektur (22) mit einer eine örtlich verlaufenden Periodenlänge T aufweisenden sinusförmige Welligkeit aufweist,
wobei eine Abwicklung der sinusförmigen Welligkeit der periodisch verlaufenden Zahnflankenkorrektur (22) eine Mittellinie definiert,
**dadurch gekennzeichnet, dass**
die periodische Zahnflankenkorrektur (22) mit einer räumlichen Mikrostruktur (26) überlagert ist, wobei die Mikrostruktur (26) bezogen auf die Mittellinie lokale Maxima (28) und/oder lokale Minima (30) sowie einen kürzesten Abstand t von t < T/2 zwischen den lokalen Maxima (28) und/oder den lokalen Minima (30) aufweist, wobei die Formgestaltung der Mikrostruktur (26) zur Erzeugung zusätzlichen Körperschalls im laufenden Betrieb der Drehmomentübertragungsanordnung dimensioniert ist, um eine Tonalität im abgestrahlten Körperschall zu maskieren.

2. Zahn (10) nach Anspruch 1, wobei 0,00005 ≤ t/T ≤ 0,49, insbesondere 0,0001 ≤ t/T ≤ 0,05, bevorzugt 0,0005 ≤ t/T ≤ 0,01 und besonders bevorzugt 0,001 ≤ t/T ≤ 0,005 gilt.

3. Zahn (10) nach Anspruch 1 oder 2, wobei die Zahnflankenkorrektur (22) eine Amplitude A in Richtung einer Flächennormalen der nicht zahnflankenkorrigierten Zahnflanke (18) und die Mikrostruktur (26) zu der Mittellinie der Zahnflankenkorrektur (22) eine Auslenkung a in Richtung einer Flächennormalen der Zahnflanke (18) aufweist, wobei 0,00005 ≤ a/A ≤ 0,50, insbesondere 0,0001 ≤ a/A ≤ 0,10, bevorzugt 0,0005 ≤ a/A ≤ 0,05 und besonders bevorzugt 0,001 ≤ a/A ≤ 0,01 gilt.

4. Zahn (10) nach einem der Ansprüche 1 bis 3, wobei die Zahnflankenkorrektur (22) und die Mikrostruktur (26) sich sowohl in Breitenrichtung (b) als auch in Längsrichtung der Zahnflanke (18), insbesondere der gesamten Zahnflanke (18), flächig gleichartig erstrecken, wobei die Breitenrichtung (b) parallel zu einer designierten Drehachse eines zugehörigen Zahnrads und die Längsrichtung vom Zahnfuss bis zum Zahnkopf verläuft, wobei die Breitenrichtung (b) und die Längsrichtung im Wesentlichen rechtwinkelig zueinander ausgerichtet sind.

5. Zahn (10) nach einem der Ansprüche 1 bis 4, wobei ein Verlauf der Mikrostruktur (26) über die Zahnflankenkorrektur (22) aperiodisch, insbesondere willkürlich und/oder stochastisch verteilt, ausgeformt ist.

6. Zahn (10) nach einem der Ansprüche 1 bis 5, wobei die Mikrostruktur (26) so ausgestaltet ist, dass bei einem Vergleich eines Zahns (10) mit diesen Mikrostrukturen (26) mit einem ansonsten identischen Zahn (10) ohne Mikrostrukturen (26) eine Fast-Fourier-Transformation eines von dem Zahn (10) mit Mikrostrukturen (26) abgegeben Körperschalls bei einer ansonsten identischen Drehmomentübertragung in derselben verzahnten Drehmomentübertragungsanordnung im Bildbereich der Fast-Fourier-Transformation eine größere Bandbreite des mindestens einen Frequenzmaximum der Tonalität (38) aufweist.

7. Zahn (10) nach einem der Ansprüche 1 bis 6, wobei die Zahnflanke (18) auf einer geradeverzahnten oder schrägverzahnten Grundform (20) für eine Evolventenverzahnung oder einer Zykloidenverzahnung beruht.

8. Verzahnungselement, insbesondere Zahnrad oder Zahnstange, für eine verzahnte Drehmomentübertragungsanordnung mit einer Mehrzahl an Zähnen (10) nach einem der Ansprüche 1 bis 7, wobei die Zahnflankenkorrektur (22) eine Amplitude A in Richtung einer Flächennormalen der nicht zahnflankenkorrigierten Zahnflanke (18) und die Mikrostruktur (26) zu der Mittellinie der Zahnflankenkorrektur (22) eine Auslenkung a in Richtung einer Flächennormalen der Zahnflanke (18) aufweist, wobei für mindestens eine Zahnflanke (18) verschiedener Zähne (10) bezüglich ihres Abstands t und/oder ihrer Auslenkung a unterschiedlich ausgeformte Mikrostrukturen (26) ausgebildet sind und/oder die periodische verlaufende Zahnflankenkorrektur (22) dieser Zähne (10), insbesondere bezüglich der Periodenlänge T und/oder eines Phasenversatzes zwischen diesen Zähnen (10), im Wesentlichen unterschiedlich ausgeformt ist.

9. Verzahnungselement nach Anspruch 8, wobei die Zahnflanken (18) mit unterschiedlich ausgeformten Mikrostrukturen (26) eine im Wesentlichen gleiche mittlere Rauheit Rₐ und/oder eine im Wesentlichen gleiche quadratische Rauheit R_{q} aufweisen.

10. Windkraftgetriebe für eine, insbesondere in bewohntem Raum aufgestellte, Windkraftanlage, mit mindestens einem Verzahnungselement nach Anspruch 8 oder 9.

11. Verfahren zur Herstellung eines Zahns (10) nach einem der Ansprüche 1 bis 7 oder eines Verzahnungselements nach Anspruch 8 oder 9, bei dem ein Zahn (10), dessen Zahnform (20) auf einer Evolventenverzahnung oder Zykloidenverzahnung beruht, an mindestens einer Zahnflanke (18) mit einer periodisch verlaufenden Zahnflankenkorrektur (22) und einer die Zahnflankenkorrektur (22) überlagernden räumlichen Mikrostruktur (26) versehen wird,
wobei die Zahnflankenkorrektur (22) durch ein mechanisches spanabhebendes Verfahren, insbesondere Schleifen, Polieren und/oder Honen, erzeugt wird.

12. Verfahren nach Anspruch 11, bei dem die Mikrostrukturen (26) zeitlich nach der Erzeugung der Zahnflankenkorrektur (22) erzeugt werden.

13. Verfahren nach Anspruch 11 oder 12, bei dem die Mikrostrukturen (26) durch Prägen, Laserbearbeitung und/oder Erodieren erzeugt werden.

14. Computerprogrammprodukt umfassend Befehle, die bei der Ausführung des Programms durch eine Datenverarbeitungseinrichtung einer Werkzeugmaschine diese veranlassen, das Verfahren nach einem der Ansprüche 11 bis 13 auszuführen.

15. Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in dem Zahn (10) nach einem der Ansprüche 1 bis 7 oder in dem Verzahnungselement nach Anspruch 8 oder 9 vorgesehenen Bestandteile, wobei
die Datenpakete dazu hergerichtet sind bei einer Verarbeitung durch eine Datenverarbeitungseinrichtung zum Betrieb einer Werkzeugmaschine zur additiven Fertigung von Vorrichtungen eine additive Herstellung der Bestandteile des Zahns (10) oder des Verzahnungselements, insbesondere durch 3D-Druck, durchzuführen, und/oder
bei einer Verarbeitung durch eine Datenverarbeitungseinrichtung zur Durchführung einer technischen Simulation eine Simulation der Funktionsweise des Zahns (10) oder des Verzahnungselements durchzuführen und hierbei erzeugte Simulationsergebnisse für eine weitere Verwendung auszugeben, insbesondere zu dem Zweck einen Dauerfestigkeitsnachweis in Abhängigkeit veränderlicher Lasten und/oder veränderlicher Temperaturbelastungen zu erbringen.

## Claims

1. Tooth (10) for a toothed torque transmission assembly, having
a tooth flank (18) for torque exchange with a counter flank of a meshing partner,
wherein the tooth flank (18) has a periodically extending tooth flank correction (22) having a sinusoidal corrugation having a locally extending period length T,
wherein a development of the sinusoidal corrugation of the periodically extending tooth flank correction (22) defines a centre line,
**characterized in that**
the periodic tooth flank correction (22) is overlaid with a spatial microstructure (26), wherein, with respect to the centre line, the microstructure (26) has local maxima (28) and/or local minima (30) and a shortest distance t of t < T/2 between the local maxima (28) and/or the local minima (30), wherein the formation of the microstructure (26) is dimensioned for generating additional structure-borne sound during operation of the torque transmission assembly, in order to mask a tonality in the structure-borne sound emitted.

2. Tooth (10) according to Claim 1, wherein 0.00005 ≤ t/T ≤ 0.49, in particular 0.0001 ≤ t/T ≤ 0.05, preferably 0.0005 ≤ t/T ≤ 0.01, and particularly preferably 0.001 ≤ t/T ≤ 0.005.

3. Tooth (10) according to Claim 1 or 2, wherein the tooth flank correction (22) has an amplitude A in the direction of a surface normal of the non-tooth-flank corrected tooth flank (18) and the microstructure (26) has a deflection a in relation to the centre line of the tooth flank correction (22) in the direction of a surface normal of the tooth flank (18), wherein 0.00005 ≤ a/A ≤ 0.50, in particular 0.0001 ≤ a/A ≤ 0.10, preferably 0.0005 ≤ a/A ≤ 0.05, and particularly preferably 0.001 ≤ a/A ≤ 0.01.

4. Tooth (10) according to any one of Claims 1 to 3, wherein the tooth flank correction (22) and the microstructure (26) extend identically in area both in the width direction (b) and in the longitudinal direction of the tooth flank (18), in particular the entire tooth flank (18), wherein the width direction (b) extends parallel to a designated axis of rotation of an associated gear wheel and the longitudinal direction extends from the tooth base to the tooth head, wherein the width direction (b) and the longitudinal direction are aligned substantially at right angles to one another.

5. Tooth (10) according to any one of Claims 1 to 4, wherein a course of the microstructure (26) over the tooth flank correction (22) is formed aperiodically, in particular arbitrarily and/or randomly distributed.

6. Tooth (10) according to any one of Claims 1 to 5, wherein the microstructure (26) is designed such that, in a comparison of a tooth (10) with these microstructures (26) with an otherwise identical tooth (10) without microstructures (26), a Fast Fourier Transform of a structure-borne sound emitted from the tooth (10) with microstructures (26), with an otherwise identical torque transmission in the same toothed torque transmission assembly, has a greater bandwidth of the at least one frequency maximum of the tonality (38) in the image range of the Fast Fourier Transform.

7. Tooth (10) according to any one of Claims 1 to 6, wherein the tooth flank (18) is based on a straight-toothed or helical-toothed base shape (20) for evolvent teeth or cycloid teeth.

8. Toothed element, in particular a gear wheel or toothed rack, for a toothed torque transmission assembly having a plurality of teeth (10) according to any one of Claims 1 to 7, wherein the tooth flank correction (22) has an amplitude A in the direction of a surface normal of the non-tooth-flank corrected tooth flank (18) and the microstructure (26) has a deflection a in the direction of a surface normal of the tooth flank (18) in relation to the centre line of the tooth flank correction (22), wherein differently formed microstructures (26) are formed for at least one tooth flank (18) of various teeth (10) with respect to their distance t and/or their deflection a, and/or the periodically extending tooth flank correction (22) of these teeth (10) is formed substantially differently, in particular with respect to the period length T and/or a phase offset between these teeth (10).

9. Toothed element according to Claim 8, wherein the tooth flanks (18) having differently formed microstructures (26) have a substantially equal mean roughness Rₐ and/or a substantially equal square roughness R_{q}.

10. Wind power gear for a wind power plant, in particular erected in inhabited space, having at least one toothed element according to Claim 8 or 9.

11. Method for manufacturing a tooth (10) according to any one of Claims 1 to 7 or a toothed element according to Claim 8 or 9, in which
a tooth (10), the tooth shape (20) of which is based on evolvent teeth or cycloid teeth, is provided on at least one tooth flank (18) with a periodically extending tooth flank correction (22) and a spatial microstructure (26) superimposed on the tooth flank correction (22),
wherein the tooth flank correction (22) is created by a mechanical chip-removing method, in particular grinding, polishing, and/or honing.

12. Method according to Claim 11, in which the microstructures (26) are created chronologically after the creation of the tooth flank correction (22).

13. Method according to Claim 11 or 12, in which the microstructures (26) are created by embossing, laser machining, and/or eroding.

14. Computer program product comprising commands which, when the program is executed by a data processing device of a machine tool, cause it to carry out the method according to any one of Claims 11 to 13.

15. Data agglomerate comprising data packets which are combined in a common file or distributed across different files and intended for depicting the three-dimensional formation and/or the interactions of all constituent parts provided in the tooth (10) according to any one of Claims 1 to 7 or in the toothed element according to Claim 8 or 9, wherein
the data packets are prepared so as, when they are processed by a data processing device for operating a machine tool for additive manufacturing of devices, to additively manufacture the constituent parts of the tooth (10) or toothed element, in particular by 3D printing, and/or
when they are processed by a data processing device for carrying out a technical simulation, to carry out a simulation of the functioning of the tooth (10) or the toothed element and output thus generated simulation results for further use, in particular in order to provide a verification of the fatigue strength as a function of variable loads and/or variable thermal loading.

## Revendications

1. Dent (10) pour un ensemble denté de transmission de couple de rotation, avec
un flanc de dent (18) pour l'échange de couple de rotation avec un contre-flanc d'un partenaire de denture,
le flanc de dent (18) comportant une correction (22) de flanc de dent s'étendant périodiquement avec une ondulation sinusoïdale comportant une longueur de période T s'étendant localement,
un traitement de l'ondulation sinusoïdale de la correction (22) de flanc de dent s'étendant périodiquement définissant une ligne médiane,
**caractérisée en ce que**
la correction (22) de flanc de dent périodique est superposée à une microstructure (26) spatiale, la microstructure (26) comportant par rapport à la ligne médiane des maximums locaux (28) et/ou des minimums locaux (30) ainsi qu'une distance t la plus courte de t < T/2 entre les maximums locaux (28) et/ou les minimums locaux (30), la forme de la microstructure (26) étant dimensionnée pour générer un bruit structurel supplémentaire lors du fonctionnement de l'ensemble de transmission de couple de rotation pour masquer une tonalité dans le bruit structurel émis.

2. Dent (10) selon la revendication 1, s'appliquant 0,00005 ≤ t/T ≤ 0,49, en particulier 0,0001 ≤ t/T ≤ 0,05, de manière préférée 0,0005 ≤ t/T ≤ 0,01 et de manière particulièrement préférée 0,001 ≤ t/T ≤ 0,005.

3. Dent (10) selon la revendication 1 ou 2, la correction (22) de flanc de dent comportant une amplitude A en direction d'une normale de surface du flanc de dent sans correction de flanc de dent (18) et la microstructure (26) comportant par rapport à la ligne médiane de la correction (22) de flanc de dent une déviation a en direction d'une normale de surface du flanc de dent (18), 0,00005 ≤ a/A ≤ 0,50, en particulier, s'appliquant 0,0001 ≤ a/A ≤ 0,10, de manière préférée 0,0005 ≤ a/A ≤ 0,05, et de manière particulièrement préférée 0,001 ≤ a/A ≤ 0,01.

4. Dent (10) selon l'une des revendications 1 à 3, la correction (22) de flanc de dent et la microstructure (26) s'étendant de manière similaire à plat à la fois dans le sens de la largeur (b) et dans le sens de la longueur du flanc de dent (18), en particulier sur la totalité du flanc de dent (18), le sens de la largeur (b) s'étendant parallèlement à un axe de rotation désigné d'un engrenage associé et le sens de la longueur s'étendant depuis la base de dent à la tête de dent, le sens de la largeur (b) et le sens de la longueur étant orientés sensiblement à angle droit l'un par rapport à l'autre.

5. Dent (10) selon l'une des revendications 1 à 4, un tracé de la microstructure (26) étant formé de manière apériodique par la correction (22) de flanc de dent, en particulier avec une répartition arbitraire et/ou stochastique.

6. Dent (10) selon l'une des revendications 1 à 5, la microstructure (26) étant configurée de telle sorte que, dans une comparaison d'une dent (10) auxdites microstructures (26) avec une dent (10) par ailleurs identique sans microstructures (26), une transformation de Fourier rapide d'un bruit structurel émis par la dent (10) avec des microstructures (26) comporte une largeur de bande plus importante de l'au moins un maximum de fréquence de la tonalité (38) lors d'une transmission de couple de rotation par ailleurs identique dans le même ensemble denté de transmission de couple de rotation dans la zone d'image de la transformation de Fourier rapide.

7. Dent (10) selon l'une des revendications 1 à 6, le flanc de dent (18) se basant sur une forme de base (20) à denture droite ou hélicoïdale pour une denture en développante ou une denture cycloïde.

8. Elément de denture, en particulier engrenage ou crémaillère, pour un ensemble denté de transmission de couple de rotation avec une multitude de dents (10) selon l'une des revendications 1 à 7, la correction (22) de flanc de dent comportant une amplitude A en direction d'une normale de surface du flanc de dent sans correction de flanc de dent (18) et la microstructure (26) comportant par rapport à la ligne médiane de la correction (22) de flanc de dent une déviation a en direction d'une normale de surface du flanc de dent (18), des microstructures (26) formées différemment étant formées pour au moins un flanc de dent (18) de dents (10) différentes en ce qui concerne leur distance t et/ou leur déviation a et/ou la correction (22) de flanc de dent s'étendant périodiquement desdites dents (10) étant formée sensiblement différemment, en particulier en ce qui concerne la longueur de période T et/ou un déphasage entre lesdites dents (10).

9. Elément de denture selon la revendication 8, les flancs de dent (18) avec des microstructures (26) formées différemment présentant une rugosité moyenne Rₐ sensiblement identique et/ou une rugosité carrée R_{q} sensiblement identique.

10. Transmission d'énergie éolienne pour une éolienne, installée en particulier dans un espace habité, avec au moins un élément de denture selon la revendication 8 ou 9.

11. Procédé de fabrication d'une dent (10) selon l'une des revendications 1 à 7 ou d'un élément de denture selon la revendication 8 ou 9, dans lequel
une dent (10), dont la forme (20) de dent se base sur une denture en développante ou une denture cycloïde, est pourvue sur au moins un flanc de dent (18) d'une correction (22) de flanc de dent s'étendant périodiquement et d'une microstructure (26) spatiale superposée à la correction (22) de flanc de dent,
la correction (22) de flanc de dent étant générée par un procédé mécanique d'usinage par enlèvement de copeaux, en particulier par meulage, polissage et/ou pierrage.

12. Procédé selon la revendication 11, dans lequel les microstructures (26) sont générées dans le temps après la génération de la correction (22) de flanc de dent.

13. Procédé selon la revendication 11 ou 12, dans lequel les microstructures (26) sont générées par gaufrage, usinage au laser et/ou érosion.

14. Produit de programme d'ordinateur comprenant des instructions qui, lors de l'exécution du programme par un dispositif de traitement de données d'une machine-outil, amènent celle-ci à exécuter le procédé selon l'une des revendications 11 à 13.

15. Agglomérat de données avec des paquets de données rassemblés dans un fichier commun ou répartis sur différents fichiers pour reproduire la forme tridimensionnelle et/ou les interactions de tous les composants prévus dans la dent (10) selon l'une des revendications 1 à 7 ou dans l'élément de denture selon la revendication 8 ou 9,
les paquets de données étant préparés pour mettre en œuvre, dans le cas d'un traitement par un dispositif de traitement de données pour faire fonctionner une machine-outil pour la production additive de dispositifs, une fabrication additive des composants de la dent (10) ou de l'élément de denture, en particulier par impression 3D, et/ou
pour mettre en œuvre, dans le cas d'un traitement par un dispositif de traitement de données pour mettre en œuvre une simulation technique, une simulation du fonctionnement de la dent (10) ou de l'élément de denture et délivrer ainsi des résultats de simulation générés destinés à être utilisés ultérieurement, en particulier dans l'objectif de démonter une résistance à la fatigue en fonction de charges variables et/ou de charges de température variables.
